# FASCICULE DE BREVET EUROPEEN

(11) **EP 2 093 818 B1**
(45) Date de publication et mention de la délivrance du brevet: **18.06.2014**
(21) Numéro de dépôt: 09152667.3
(22) Date de dépôt: 12.02.2009
(51) Int. Cl.: H01M 10/613, H01M 10/625, H01M 10/643, H01M 10/6555, H01M 10/656, H01M 2/10, H01M 10/6557

(54) **Bloc de batterie d'entraînement d'un véhicule électrique, à pile à combustible ou hybride**
Antriebsbatteriebaugruppe eines Elektro-, Brennstoffzellen- oder Hybridfahrzeugs
Power train battery assembly of an electric, fuel-cell or hybrid vehicle

(30) Priorité: 14.02.2008 DE 102008009041
(43) Date de publication de la demande: 26.08.2009
(73) Titulaire: Valeo Klimasysteme GmbH, 96476 Rodach (DE)
(72) Inventeur: Haussmann, Roland, 69168, WIESLOCH (DE)
(74) Mandataire: Léveillé, Christophe

(56) Documents cités:
- US-A1- 2002 177 035
- US-B1- 6 340 877
- US-B1- 6 479 187

## Description

La présente invention concerne un bloc de batterie d'entraînement d'un véhicule électrique, à pile à combustible ou hybride destiné à transporter des personnes et/ou des marchandises, comprenant plusieurs éléments de batterie préfabriqués, fermés vers l'extérieur par respectivement des boîtiers d'élément spécifiques et un boîtier fixant les éléments de batterie les uns aux autres, les éléments de batterie étant disposés en rangées. L'invention peut être utilisée pour des véhicules automobiles tout comme pour des camions ou d'autres véhicules.

Etant donné l'exigence de réduction du CO₂, le futur verra croître le nombre de véhicules à fonctionnement électrique, au moins de façon subsidiaire. On utilise comme source d'énergie, comme le prévoit de préférence la présente invention, des piles très performantes dotées d'éléments de batterie NiMH ou Li-ion. Ces éléments préfabriqués sont regroupés pour former un paquet d'éléments et montés en série, de sorte que des batteries très performantes, plus précisément des accumulateurs haute performance, résultent de nombreux éléments de batterie individuels d'une tension habituelle de 3,6 V. Le paquet de batterie est logé dans un boîtier métallique stable. Etant donné que ces blocs de batterie sont d'une taille énorme, ils doivent être logés dans le véhicule en des points auxquels on n'a jusqu'à présent pas encore pensé pour stocker l'énergie, par exemple au-dessous de la carrosserie du véhicule et derrière l'essieu arrière. La stabilité du boîtier ainsi que le positionnement des éléments de batterie individuels doivent également être garantis en cas d'une collision, afin qu'il ne puisse se produire aucun court-circuit ou même aucun incendie. Pour cette raison également, il est important d'utiliser des boîtiers stables.

Pour ces blocs de batterie d'entraînement connus du document US6479187, des éléments de batterie préfabriqués, fermés vers l'extérieur, sont regroupés dans le boîtier commun pour former une batterie haute tension (tensions habituelles 130 V pour ce qu'on appelle les hybrides faibles et 360 V pour un véhicule entièrement hybride). Les éléments de batterie ne doivent pas dépasser leur température maximale, allant de 55 à 80 °C, auquel cas cela réduirait la durée de vie des éléments. La réduction de la durée de vie des éléments de batterie et de ce fait de tout le bloc peut provenir en outre d'une répartition non homogène de la température entre les éléments. C'est la raison pour laquelle il est nécessaire de veiller à ce que les températures entre les éléments ne se distinguent pas plus de ±2 à 5 K, de préférence seulement de ±2 à 3 K. Etant donné que les éléments sont montés électriquement en série, un élément défectueux peut être de nature à faire naître une panne totale de tout le bloc de batterie. Des réflexions ont déjà été menées pour maintenir le bloc de batterie à température constante grâce à un système de refroidissement de fluide actif.

D'après le document DE 10 2007 021 309.5 n'ayant pas fait l'objet d'une publication préalable, on sait entourer cheque élément de batterie de minces lamelles métalliques, qui sont à nouveau couplées thermiquement à un tube acheminant un fluide de refroidissement. Ainsi, chaque élément de batterie est refroidi efficacement. Afin de garantir un logement sans jeu des éléments de batterie dans le boîtier extérieur, il a été proposé de prévoir, entre les éléments de batterie, des taquets en matière plastique faisant partie du boîtier extérieur.

Le document US 6 340 877 divulgue un bloc de batterie selon le préambule de la revendication 1.

Le document US 2007/0177035 divulgue un bloc de batterie comportant des moyens de refroidissement des éléments de la batterie.

L'objet de l'invention est de créer un bloc de batterie d'entraînement dont le boîtier présente uns structure simplifiée, qui peut cependant compenser les tolérances de diamètres absolument considérables des éléments de batterie, afin qu'un maintien stable et exempt de vibrations soit garanti.

En outre, lors d'un refroidissement actif du bloc de batterie d'entraînement, un transfert de chaleur sûr entre chaque élément de batterie et le fluide de refroidissement est garanti, malgré les inévitables tolérances des éléments de batterie.

Le premier problème cité ci-dessus est résolu par un bloc de batterie d'entraînement du type cité au début, en ce que le boîtier comprend par rangée au moins deux parois touchant les zones extérieures opposées de la périphérie des éléments de batterie, lesquelles parois sont étayées l'une contre l'autre dans la direction radiale des éléments de batterie par des moyens de retenue, afin de serrer radialement les éléments de batterie entre eux, chaque paroi pour un élément de batterie possédant une section de serrage correspondante.

Le bloc de batterie d'entraînement selon l'invention comprend également un boîtier, lequel est composé de plusieurs parois, qui, au montage, sont mobiles les unes par rapport aux autres. Il est de ce fait possible de serrer les éléments entre les parois, afin d'obtenir une compensation des tolérances.

De préférence, les parois sont flexibles, et peuvent par conséquent être fléchies de façon différente d'un élément de batterie à un autre, afin que les parois puissent s'adapter pour ainsi dire à la tolérance de chaque élément de batterie.

Selon le mode de réalisation préféré, les parois sont des pièces séparées préfabriquées, qui ne sont reliées les unes aux autres que par les moyens de retenue. Mais il serait en outre également possible de relier les parois les unes aux autres, en utilisant par exemple des passerelles en matière plastique, de sorte qu'elles sont fabriquées en tant que pièce commune qui n'est alors fléchie qu'au niveau des passerelles en matière plastique, afin de déplacer les parois les unes en direction des autres.

Le maintien des éléments de batterie est amélioré par le fait que les parois peuvent posséder des sections de serrage particulièrement en forme de demi-coque, adaptées à la périphérie extérieure des éléments de batterie.

Selon le mode de réalisation préféré, les sections de serrage présentent dans ce cas un rayon qui est supérieur au plus grand rayon présent dans la plage de tolérance d'un élément de batterie. Ceci garantira que des éléments de batterie épuisant véritablement l'ensemble de la plage de tolérance puissent être reçus dans les sections de serrage.

De préférence, les sections de serrage reposent contre les sections d'extrémité axiales des éléments de batterie, c'est-à-dire en haut et en bas des éléments de batterie, de sorte qu'il reste encore de la place entre celles-ci, par exemple pour le système de refroidissement actif.

Le système de refroidissement actif comporte au moins un tuyau acheminant le fluide de refroidissement destiné à évacuer l'énergie calorifique des éléments de batterie, lequel tube s'étend à travers le boîtier. En particulier, le tube s'étend dans ce cas de façon crénelée ou ondulée à travers le boîtier afin de mettre à disposition la surface la plus grande surface possible destinée au transfert de chaleur.

Le tube possède en particulier des zones rectilignes et fléchies, sachant que des sections d'appui de la paroi ne doivent s'appuyer que contre les zones rectilignes, dont la tolérance est plus étroite. Ces sections de paroi fixent la position du tube dans le boîtier et garantissent le contact des lamelles avec le tube. Les sections d'appui elles-mêmes sont éloignées de la paroi, sont intégrées sur celle-ci et sont tenues à l'écart des sections de serrage. Cet espacement est très important, car le tube fléchi comprend tout naturellement de fortes tolérances imposées par la fabrication, qui ne devraient pas s'ajouter aux tolérances des éléments de batterie, ce qui serait alors le cas si les sections de serrage formaient également les sections d'appui pour les tubes.

Dans ce cas, il est particulièrement avantageux que la paroi soit dans l'ensemble flexible et que les sections d'appui soient éloignées des sections de serrage, de sorte que les sections de la paroi, qui forment les sections d'appui et les sections de serrage, peuvent s'adapter séparément aux pièces à maintenir (éléments de batterie et/ou tube). Dans ce cas, il peut être bien sûr avantageux que les sections d'appui et/ou de serrage soient des prolongements flexibles de la paroi.

Comme cela a déjà été mentionné, le bloc de batterie d'entraînement peut évacuer l'énergie calorifique des éléments en direction du tube par l'intermédiaire des lamelles de refroidissement. Dans ce cas, le tube est couplé aux lamelles de refroidissement, lesquelles reposent contre les éléments de batterie.

Il est dans ce cas particulièrement avantageux que les lamelles de refroidissement reposent de façon étendue contre le tube et contre les batteries, afin de mettre à disposition une grande surface de transfert de chaleur. A cet effet, on a pensé à des sections de pression de lamelles prévues sur la paroi, qui sont éloignées de la paroi et pressent à plat les lamelles contre la périphérie des batteries.

Il est également dans ce cas particulièrement préférable que les sections de pression de lamelle forment des sections de paroi élastiques afin de garantir une précontrainte.

Les sections de pression de lamelle peuvent posséder une géométrie adaptée à la forme d'une batterie, afin de garantir une pression à plat.

Pour simplifier la fabrication des parois, il peut être avantageux de réaliser les sections de pression de lamelle de manière solidaire avec les sections d'appui, de sorte que les sections de pression de lamelle sortent des sections d'appui et s'étendent à distance de celles-ci. Les deux sections devraient cependant pouvoir être découplées mécaniquement l'une de l'autre, pour autant qu'elles exercent chacune pour soi une force de précontrainte sur les parties adjacentes (lamelles par rapport aux éléments de batterie ou au tube), afin de les stabiliser et de mettre en contact les pièces adjacentes.

Les sections de pression de lamelle et les lamelles elles-mêmes devraient toutes les deux de préférence être espacées des sections de serrage, afin de garantir ici également une stabilisation et une mise en contact indépendantes.

Il serait désavantageux que les lamelles viennent se situer entre une section de serrage et l'élément de batterie. Dans ce cas, la tolérance de la lamelle s'ajouterait en fait à celle de l'élément de batterie et à celle des sections de serrage.

Comme cela a déjà été indiqué précédemment, le serrage radial des éléments de batterie, la mise en contact des éléments de batterie avec les lamelles de refroidissement et la mise en contact des lamelles de refroidissement avec les tubes s'effectuent respectivement en faisant appliquer une précontrainte par différentes sections de la paroi.

Dans le mode de réalisation préféré, les parois sont constituées de matière plastique, afin d'obtenir une flexibilité suffisante des sections de paroi.

Les parois sont reliées les unes aux autres, notamment par au moins un couvercle, qui permet, en plus des moyens de retenue, une fixation supplémentaire des parois.

Les éléments de batterie peuvent être étayés axialement et stabilisés axialement sans jeu par le couvercle.

Le couvercle est notamment vissé aux parois.

Les moyens de retenue peuvent éventuellement également être stabilisés en vissant le couvercle, en faisant étendre les vis jusqu'aux moyens de retenue.

Les moyens de retenue sont notamment des saillies prévues sur une paroi, qui pénètrent dans des évidements correspondants de la paroi opposée. Dans ce cas, les moyens de retenue et les évidements devraient être adaptés les uns aux autres de sorte que les moyens de retenue présentent différentes profondeurs, et ce sur toute la plage de tolérance des éléments de batterie présentant différentes épaisseurs, peuvent pénétrer dans les évidements.

Selon un mode de réalisation préféré, il est prévu que les moyens de retenue comprennent sur leur surface extérieure une denture qui se met en prise par coopération de formes dans la surface de l'évidement associé.

Lorsque l'évidement possède une denture complémentaire, cela forme un assemblage encliquetable. Il est de ce fait possible, sans utiliser de vis additionnelles séparées etc., de déplacer facilement les parois les unes en direction des autres et de les encliqueter au moins par endroits.

En particulier, respectivement au moins un moyen de retenue est prévu entre des éléments de batterie voisins, afin que la précontrainte et l'adaptation de la paroi à chaque élément de batterie soient possibles.

Les moyens de retenue devraient en outre dépasser axialement dans la zone des sections de serrage, afin de garantir un transfert de force direct sur les sections de serrage.

La longueur axiale des moyens de retenue correspond de préférence au moins à 0,8 fois la longueur axiale de la section de serrage associée, afin que la force soit transférée sur l'élément de batterie au-dessus de toute la longueur de la section de serrage.

En divisant le boîtier en parois, qui sont empilées par couche avec les rangées d'éléments de batterie, il est possible d'obtenir encore bien d'autres avantages. D'une part, le boîtier ainsi fabriqué est très peu onéreux, très robuste et très léger, d'autre part il est possible de fabriquer des boîtiers modulaires. Etant donné que le nombre d'éléments de batterie montés varie, il est possible de superposer plusieurs parois identiques, afin d'obtenir un bloc de batterie d'entraînement d'une autre puissance.

D'autres caractéristiques et avantages découlent de la description suivante et des dessins suivants auxquels il est fait référence. On peut voir sur les dessins que :
- la figure 1 illustre une vue en perspective en éclaté du bloc de batterie d'entraînement selon l'invention ;
- la figure 2 illustre une vue agrandie des parois juxtaposées et de l'unité composée de tubes et de lamelles de refroidissement ;
- la figure 3 illustre d'une part l'unité composée de parois, de tubes et de lamelles de refroidissement et d'autre part les éléments de batterie destinés à être logés dedans ;
- la figure 4 illustre une vue en élévation du dessus du bloc de batterie d'entraînement pas encore entièrement monté ;
- la figure 5 illustre le bloc de batterie d'entraînement juste avant la fixation du couvercle ;
- la figure 6 illustre le bloc de batterie d'entraînement selon l'invention entièrement monté ;
- la figure 7 illustre une vue en coupe longitudinale schématique à travers le bloc de batterie dans la zone d'un élément de batterie ;
- la figure 8 illustre une vue en coupe à travers le bloc de batterie d'entraînement le long de la ligne VIII-VIII sur la figure 7 ;
- la figure 9 illustre une vue en coupe transversale agrandie à travers un bloc de batterie d'entraînement selon l'invention dans la zone des lamelles de refroidissement selon la ligne IX-IX sur la figure 7 ;
- la figure 10 illustre une vue en perspective schématique d'une paroi utilisée pour le bloc de batterie d'entraînement selon l'invention ;
- la figure 11 illustre deux parois opposées qui peuvent être utilisées pour le bloc de batterie d'entraînement selon l'invention ;
- la figure 12 illustre une vue en coupe agrandie à travers le bloc de batterie d'entraînement dans la zone des moyens de retenue ;
- la figure 13 illustre une vue agrandie d'un moyen de retenue selon un autre mode de réalisation ;
- la figure 14 illustre une vue en coupe agrandie à travers le bloc de batterie d'entraînement selon un autre mode de réalisation dans la zone d'un moyen de retenue juste avant l'encliquetage ;
- la figure 15 illustre une vue en coupe schématique à travers un élément de batterie d'un bloc de batterie selon un autre mode de réalisation ;
- la figure 16 illustre une vue en éclaté du dispositif de refroidissement du bloc selon la figure 15,
- la figure 17 illustre une vue en élévation d'une pièce du bloc selon la figure 15 ;
- la figure 18 illustre le bloc selon la figure 15 comprenant les éléments de batterie pas encore introduits ; et
- la figure 19 illustre une vue en coupe schématique à travers un mode de réalisation en variante de moyens de retenue entre des parois voisines.

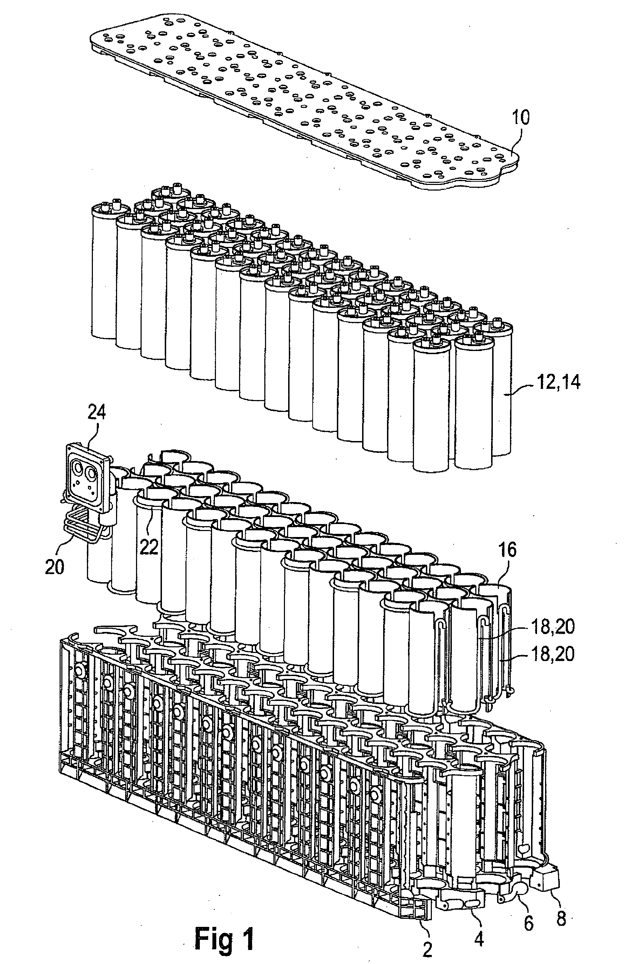

Sur la figure 1 est illustré un bloc de batterie d'entraînement d'un véhicule électrique, à pile à combustible ou hybride, qui est pourvu d'un refroidissement actif. Le boîtier extérieur comporte plusieurs parois 2, 4, 6 et 8 constituées de matière plastique, les parois 2 et 8 représentant des parois extérieures et les parois 4 et 6 des parois intermédiaires. En outre, le boîtier extérieur comporte un couvercle 10 pouvant être vissé. Les parois 2 à 8 et le couvercle 10 sont fabriqués en PP, PA, PPS ou PPA par moulage par injection.

De nombreux éléments de batterie 12 sont logés et montés en série dans le boîtier, de sorte qu'une batterie haute tension, plus précisément un accumulateur haute tension, est créée. Les éléments de batterie individuels 12 sont des batteries NiMH ou Li-ion et des unités fermées en soi qui sont formées sur l'extérieur par un boîtier d'élément 14 caractéristique. Les éléments de batterie 12 sont regroupés dans le boîtier extérieur pour former un paquet soit avant le montage soit seulement au moment d'être insérés dans le boîtier extérieur pour former un paquet.

Comme il est possible de le reconnaître sur la figure 1, les éléments de batterie 12 sont disposés en rangées parallèles. Dans le mode de réalisation selon la figure 1, il existe trois rangées d'éléments parallèles.

Chaque élément de batterie 12 est entouré à l'extérieur sur son boîtier d'élément, qui est notamment constitué de métal, par des lamelles de refroidissement 16.

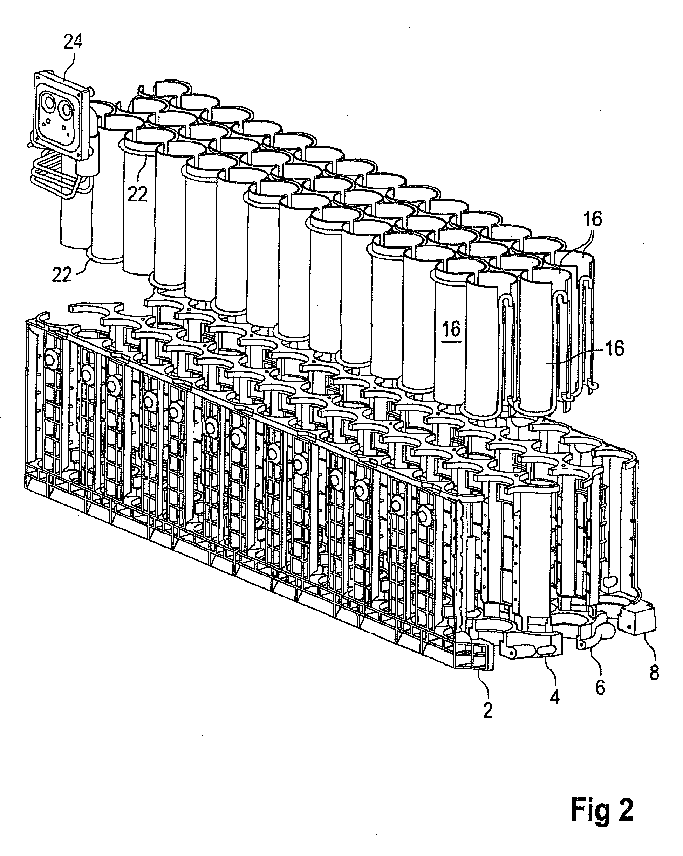

Comme il est possible de le reconnaître sur la figure 1 et en particulier sur la figure 2, les lamelles de refroidissement 16 sont de minces tôles métalliques, qui sont façonnées de façon ondulée, afin de s'adapter de manière optimale à la forme des éléments de batterie 12. Chaque lamelle de refroidissement 16 entoure une rangée d'éléments de batterie sur presque toute sa moitié de périphérie extérieure, de sorte que deux lamelles de refroidissement 16 par rangée d'éléments de batterie touchent les sections opposées de chaque élément de batterie 12. Les éléments de batterie 12 sont pour ainsi dire en grande partie insérés dans les lamelles de refroidissement 16.

Afin de veiller à ce que l'évacuation de chaleur soit de suffisamment bonne qualité, plusieurs tubes 16 acheminant le fluide de refroidissement sont prévus, lesquels sont en contact direct avec les lamelles de refroidissement 16 associées et s'étendent vers le haut et vers le bas de façon crénelée le long des lamelles de refroidissement 16. Chaque tube 18 présente une section 20 s'étendant de façon rectiligne, qui s'étend respectivement sur les extrémités les plus extérieures d'une section de demi-coque d'une lamelle de refroidissement 16, ainsi qu'une section 22 fléchie, presque en forme de demi-cercle, qui relie les sections rectilignes 20 voisines. La section fléchie 22 de même que les sections rectilignes 20 touchent la lamelle de refroidissement associée. Comme il est possible de bien le reconnaître sur la figure 2, le tube 18 s'étend sur une face d'une section de demi-coque d'une lamelle de refroidissement 16, puis, en passant par la section fléchie 22, jusqu'à la section rectiligne 20 opposée, ici vers le haut, puis, en passant par la section fléchie 22 suivante, en direction de la section de demi-coque voisine etc.

De préférence, un tube 18 évacue ainsi la chaleur d'une lamelle de refroidissement 16. Les tubes 18 débouchent dans un raccord de fluide de refroidissement 24, qui mène à un circuit de refroidissement.

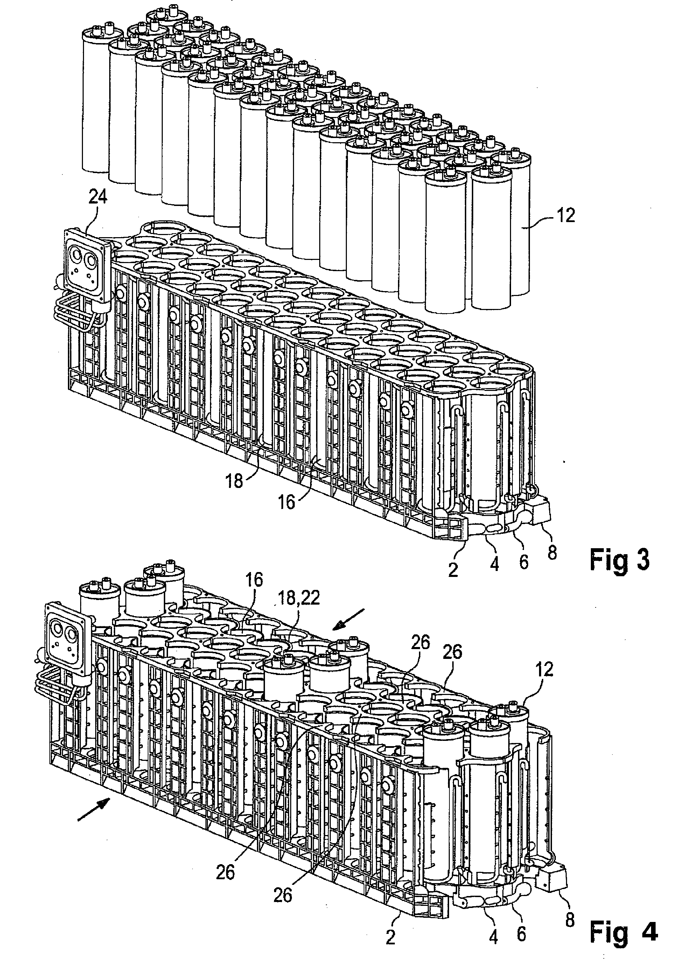

Les lamelles de refroidissement 16 et les tubes 18 ne sont pas soudés ou brasés les uns aux autres, ils reposent au contraire de manière plus ou moins lâche les uns contre les autres dans la position de départ. Le paquet composé de lamelles de refroidissement 16 et du tube 18, comme il est illustré sur les figures 1 et 2, est posé entre les parois 2 à 8 correspondantes, les parois 2 à 8 étant tout d'abord encore clairement espacées les unes des autres. Ensuite, le paquet composé des éléments de batterie 12 ou les éléments de batterie individuels 12 sont insérés par le dessus dans les chambres correspondantes formées par les parois 2 à 8 et les lamelles de refroidissement 16 (voir la figure 3), aucun ajustement avec serrage n'étant encore présent dans cet état, de sorte que l'introduction des éléments de batterie 12 est très simple.

Il est possible de reconnaître sur la figure 4 des éléments de batterie 12 caractéristiques presque entièrement introduits.

Après que toutes les chambres cylindriques formées par les parois 2 à 8 ont été équipées d'éléments de batterie 12, les parois 2 à 6 sont rassemblées transversalement à leur extension longitudinale (voir les flèches sur la figure 4).

Comme il est possible de le voir sur les figures 4, 7 et 8, les parois comprennent sur leurs bords supérieurs et inférieurs ce qu'on appelle des sections de serrage 26 sous forme de demi-coques, qui entourent les extrémités axiales des éléments de batterie 12 et reposent directement contre celles-ci. En utilisant des éléments de batterie 12 de type cylindrique circulaire, les diamètres des sections de serrage 26 sont légèrement supérieurs au diamètre maximal du plus grand élément de batterie 12 situé sur l'extrémité supérieure de la tolérance.

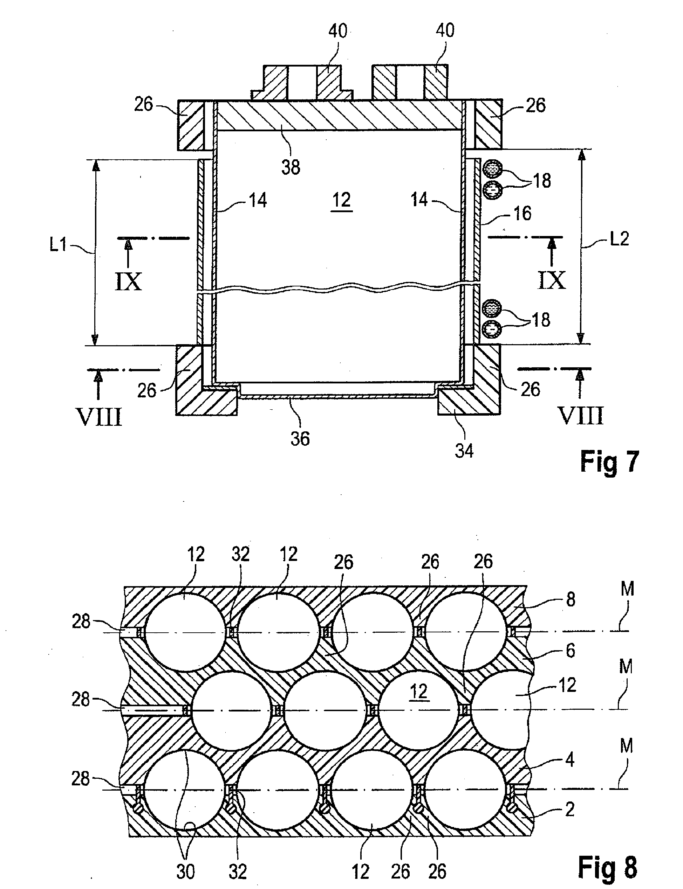

En outre, les sections de serrage, qui sont solidaires de chaque paroi 2 à 8, dépassent radialement jusqu'à ce qu'elles terminent avant ce qu'on appelle la ligne médiane M d'une rangée d'éléments de batterie (voir la figure 8), afin qu'il reste constamment une fente 28 entre les prolongements voisins, tournés les uns vers les autres, des sections de serrage 26. La présence de ces fentes 28 garantit, pour les éléments de batterie 12 les plus petits, qu'une force de serrage, par l'intermédiaire de laquelle les parois touchent les zones extérieures opposées 30 de la périphérie des éléments de batterie 12, soit toujours présente entre les parois voisines 2 à 8 (voir la figure 8).

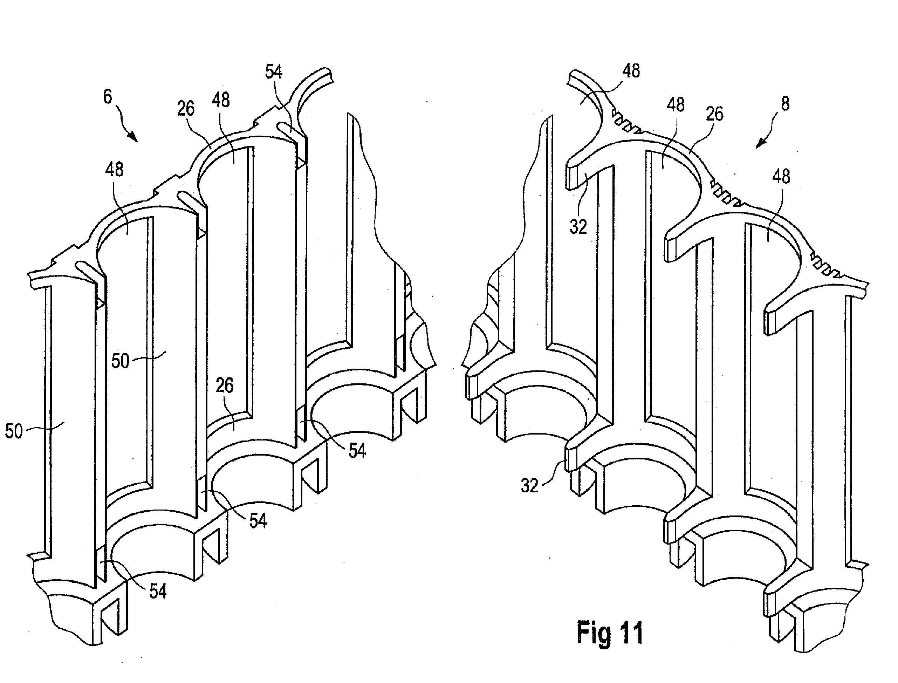

Comme il est possible de le comprendre également d'après la figure 8, des moyens de retenue 32 intégrés de manière solidaire sur les parois 2 à 8, éloignés des parois 2 à 8, sont prévus, lesquels moyens se mettent en prise dans les évidements des parois 2 à 8 opposées, et servent à fixer les parois 2 à 8 les unes contre les autres. Les parois 2 à 8 sont regroupées par ces moyens de retenue 32 pour former un boîtier commun. D'autres détails concernant les moyens de retenue 32 seront expliqués par la suite en faisant référence aux figures 11 à 14.

Il est encore possible de comprendre d'après la figure 7 que les parois 2 à 8 comprennent sur l'extrémité inférieure une section de socle 34 sous forme de prolongements de forme semi-annulaire, sur lesquels les éléments de batterie 12 reposent dans la direction axiale. Chaque élément de batterie 12 devrait faire saillie axialement vers le haut, légèrement au-dessus des parois associées.

Sur la figure 7, il est possible de reconnaître également les parois frontales 38 de l'élément de batterie 12 ainsi que les contacts électriques 40.

Enfin, on voit sur la figure 7 encore une autre lamelle de refroidissement 16 comprenant un tube 18 associé, qui est découpé en son centre par la section fléchie 22 (également désigné par la suite par coude). Au cas où les coudes sont installés à l'intérieur de l'extension des lamelles de refroidissement 16, les sections fléchies 22 de rangées adjacentes sont disposées en quinconce dans la direction longitudinale de l'axe de l'élément.

Sur la figure 7, ceci est illustré par la superposition des paires supérieure et inférieure de tubes 18, les tubes respectivement supérieurs et/ou inférieurs étant associés les uns aux autres pour les paires supérieure et inférieure. En décalant les coudes en hauteur, les tubes 18 ne se croisent pas dans la zone des sections fléchies 22, et la distance minimale entre les éléments correspond à deux fois l'épaisseur de la lamelle de refroidissement 16 plus un diamètre de tube.

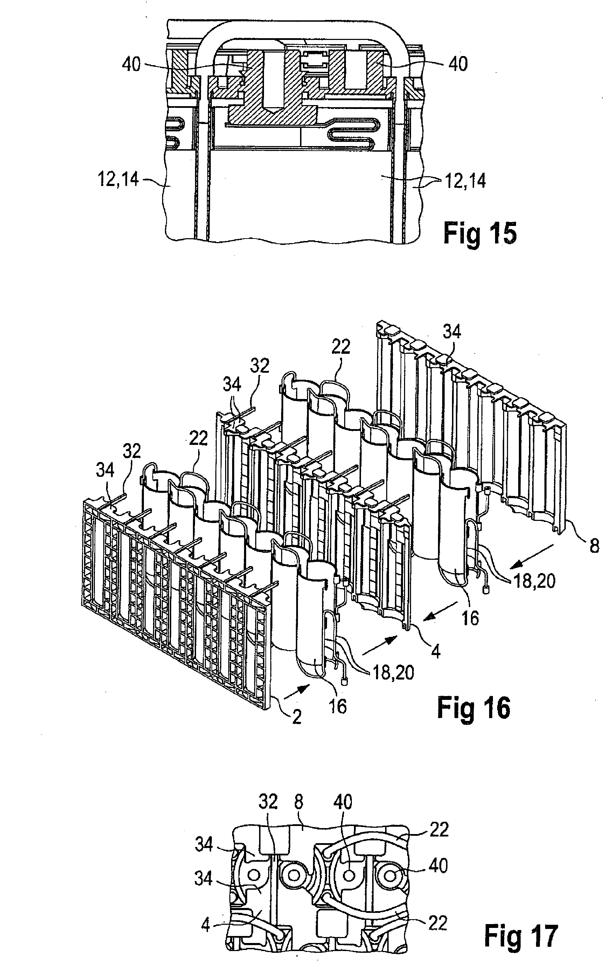

Les éléments peuvent être positionnés encore plus étroitement lorsque les coudes sont installés à l'extérieur de l'extension axiale des lamelles de refroidissement 16 et des éléments selon les figures 15 à 18. Dans ce cas, la distance minimale entre les éléments ne mesure que 2 fois l'épaisseur des lamelles de refroidissement 16.

Sur la figure 7 sont représentées les pièces individuelles, légèrement espacées les unes des autres, par exemple les lamelles 16 du boîtier d'élément 14, de même que les sections de serrage 26 des éléments de batterie 12. Ceci n'est cependant reproduit qu'à titre de différentiation, les pièces devraient plutôt se toucher mutuellement une fois le montage fini.

Il est cependant possible de parfaitement reconnaître que les lamelles de refroidissement 16 se situent entre les sections de serrage 26 et ne viennent pas se situer dans les zones comprises entre les sections de serrage 16 et les sections correspondantes des éléments de batterie 12, contre lesquelles les sections de serrage 26 reposent directement. La distance L2 entre les sections de serrage 26 est par conséquent également supérieure à la hauteur axiale L1 de la lamelle de refroidissement 16 située entre celles-ci.

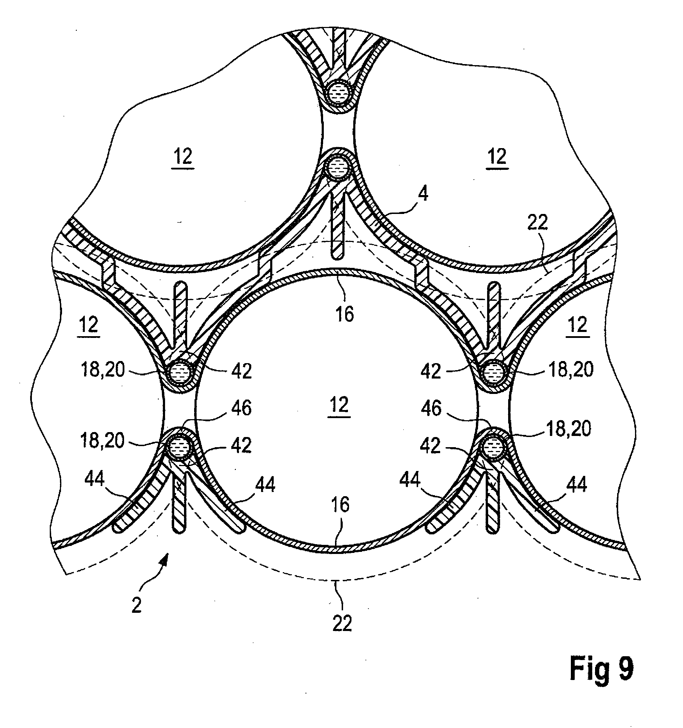

Sur la figure 9, il est possible de mieux observer le positionnement des tubes 18 et des lamelles de refroidissement 16. Sur les parois 2 à 8 sont intégrées de manière solidaire des fixations flexibles du type nervure, intégrées dessus, qui servent à positionner les lamelles de refroidissement 16 et les tubes 18. Sur les parois 2 à 8, ce qu'on appelle des sections d'appui 42, qui présentent une forme de coque adaptée aux tubes 18, s'étendent axialement entre les sections de serrage 26, afin que les tubes 18 reposent contre celles-ci en étant parfaitement bien positionnés. Des sections de pression de lamelle 44 partent des sections d'appui 42, et ce approximativement suivant un angle de 90° les unes par rapport aux autres, afin de servir de sections de pression 44 aux éléments de batterie voisins 12.

Comme il est possible de le reconnaître sur la figure 9, les sections de pression de lamelle 44 flexibles et très élastiques pressent les lamelles de refroidissement 16 contre les éléments de batterie 12. De ce fait, les lamelles de refroidissement 16 s'appuient entièrement contre les éléments de batterie 12. Simultanément, les sections d'appui 42 pressent les tubes 18 contre les sections de lamelle de refroidissement 46, qui se situent entre les éléments de batterie voisins 12 et sont fléchies dans cette zone en fonction des tubes 18, afin de les envelopper.

Les sections d'appui 42 et les sections de pression de lamelle 44 sont espacées des sections de serrage 26 et ne servent pas à fixer les éléments de batterie 12 mais présentent des parties caractéristiques qu'elles positionnent, à savoir les tubes 18 et/ou les lamelles de refroidissement 16.

Le serrage radial des éléments de batterie 12, la mise en contact des éléments de batterie 12 avec les lamelles de refroidissement 16 et la mise en contact des lamelles de refroidissement 16 avec les tubes 18 s'effectuent respectivement en faisant appliquer une précontrainte par les différentes sections des parois 2 à 8, c'est-à-dire par des sections présentant des fonctions séparées les unes des autres, sous forme de sections de serrage 26, des sections de pression de lamelle 44 et/ou des sections d'appui 42.

La précontrainte entre toutes les pièces est cependant garantie, malgré d'importantes tolérances, par la flexibilité des parois 2 à 8 et des sections 26, 42, 44 venant juste d'être citées.

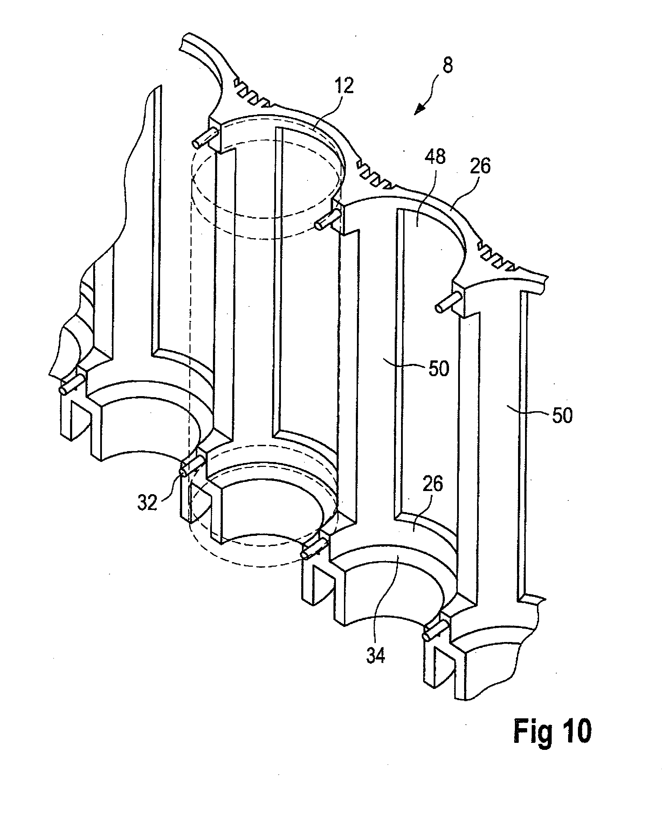

Sur la figure 10, on reconnaît les sections de socle 34, qui sont dans ce cas intégrées sur la paroi 8, les sections de serrage 26 ainsi que les moyens de retenue 32 réalisés dans ce cas sous forme de languette. Un élément de batterie 12 est indiqué par des lignes interrompues. Afin de réduire le poids, les parois 2 à 8 comprennent axialement, entre les sections de serrage 26, des évidements en forme de fenêtre 48, de sorte que des nervures de raccordement 50 sont formées. Ces nervures de raccordement 50 sont représentées de façon simplifiée sur la figure 10. Elles sont en réalité pourvues de prolongements de type nervure sous forme de sections d'appui et de sections de pression de lamelle 42, 44, telles qu'elles sont représentées en coupe sur la figure 9.

Après l'insertion et le serrage radial des éléments de batterie 12, des lamelles de refroidissement 16 et des tubes 18, le couvercle 10 (voir les figures 1 à 5) est placé par le dessus sur les parois 2 à 8 et vissé à celles-ci. Le couvercle 10 présente de nombreuses ouvertures 52, que les contacts 40 peuvent traverser. Le couvercle 10 étaye axialement les éléments de batterie 12 entre lui et les sections de socle 34, de sorte qu'un logement sans jeu dans le sens axial est également garanti.

Le couvercle 10 devrait également être constitué de matière plastique et présenter une certaine flexibilité, afin de s'adapter aux tolérances de longueur des éléments de batterie 12.

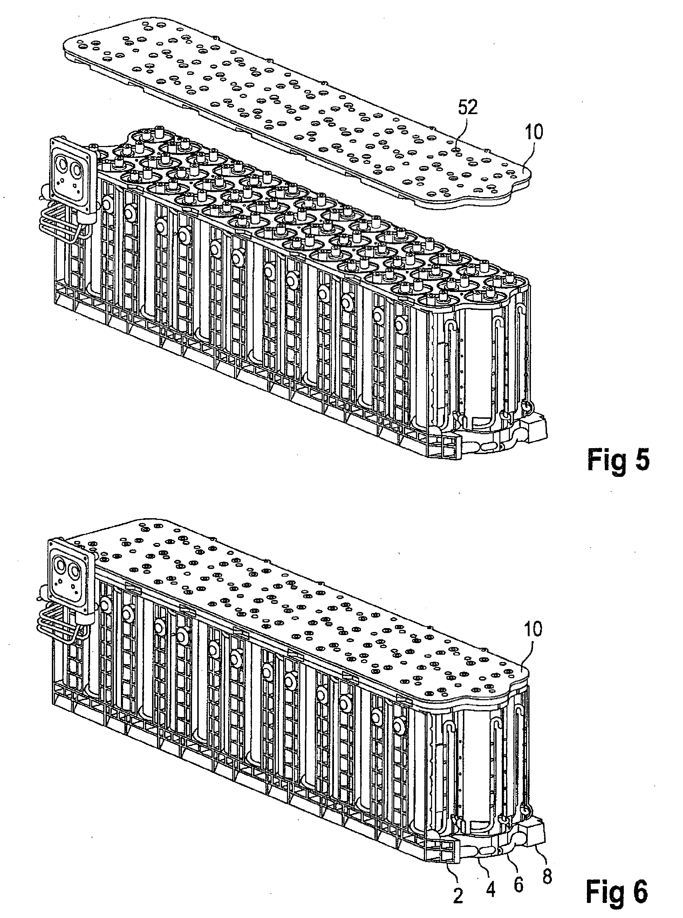

Une fois le couvercle 10 rattaché, le bloc de batterie d'entraînement garde la forme très compacte selon la figure 6.

En lieu et place des moyens de retenue en forme de languette 32, ceux-ci peuvent également être allongés et cunéiformes dans la direction axiale, comme cela est représenté sur la figure 11.

Les moyens de retenue 32 présentent une longueur axiale ou, mieux, une hauteur axiale qui correspond au moins à 0,8 fois la longueur axiale de la section de serrage 26 associée. Dans l'exemple illustré sur la figure 11, les moyens de retenue 32 sont même encore plus hauts que les sections de serrage 26.

Les évidements 54 complémentaires, prévus sur la paroi 6 opposée, sont, de manière correspondante, en forme de fente.

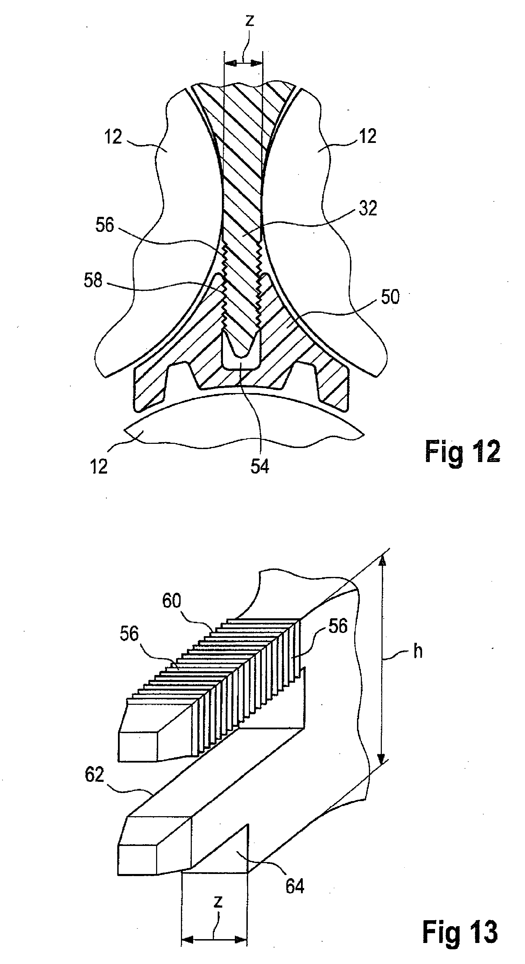

Sur la figure 12, il est possible de voir que les moyens de retenue 32 forment un assemblage encliquetable, car ils comprennent sur leur face extérieure un type de denture 56, qui pénètre dans l'évidement dans une denture complémentaire 58 correspondante. L'écart entre des dents voisines devrait dans ce cas être compris entre 0,1 et 1 mm. Une liaison par coopération de formes, par laquelle la précontrainte est alors également exercée sur les pièces destinées à être pressées les unes avec les autres entre les parois 2 à 8, est également obtenue par la liaison par encliquetage.

L'épaisseur Z (voir la figure 12) du moyen de retenue 32, vu dans la direction axiale, devrait être comprise entre 0,5 fois l'écart entre éléments de batterie 12 voisins et l'écart entre éléments de batterie voisins 12.

Les moyens de retenue 32 peuvent également être divisés en moyens de retenue 60, 62 individuels en saillie selon la figure 13. La hauteur de la saillie totale h correspond dans ce cas à la hauteur de la section de serrage 26. En outre, il est également possible de prévoir sur un moyen de retenue, comme ici présent le moyen de retenue 32, une butée 64 qui prédéfinit la profondeur de pénétration maximale, à éviter le plus possible, des moyens de retenue 32 dans l'évidement 54 correspondant.

Afin d'obtenir, en lieu et place ou en plus de l'encliquetage des moyens de retenue 32, un blocage mutuel des parois 2 à 8, les vis, avec lesquelles le couvercle 10 est fixé aux parois 2 à 8, peuvent pénétrer jusqu'aux moyens de retenue 32 et les fixer par rapport à la paroi voisine.

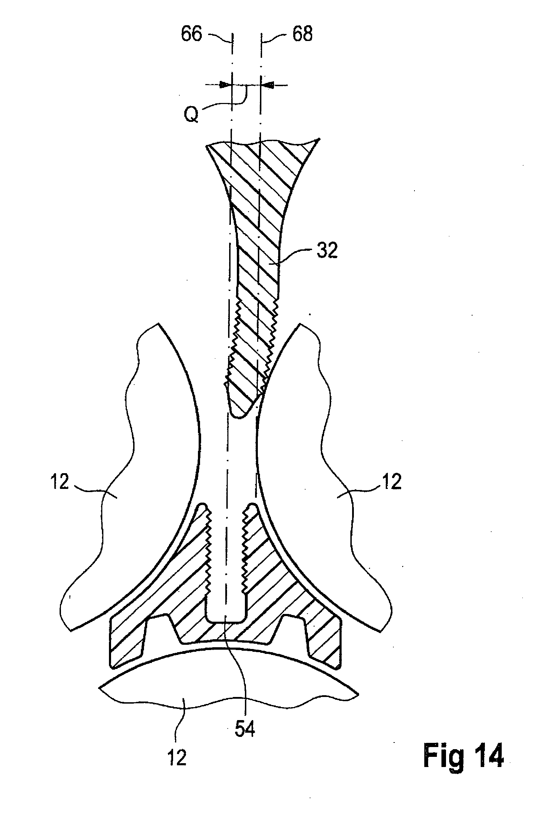

Sur la figure 14, il est possible de reconnaître le décalage maximal entre un moyen de retenue 32 et l'évidement 54 associé, c'est-à-dire le décalage entre les parois 2 à 8 voisines. Etant donné que les moyens de retenue 32 sont élastiques et les éléments de batterie 12 circulaires en section transversale, et que les moyens de retenue 32 possèdent un cône sur leur pointe, les lignes médianes 66, 68 de l'évidement 54 et des moyens de retenue 32 peuvent correspondre à peu près à la moitié de l'écart entre des éléments de batterie voisins 12, le creux présentant une largeur qui correspond également à peu près à l'écart entre éléments de batterie voisins 12.

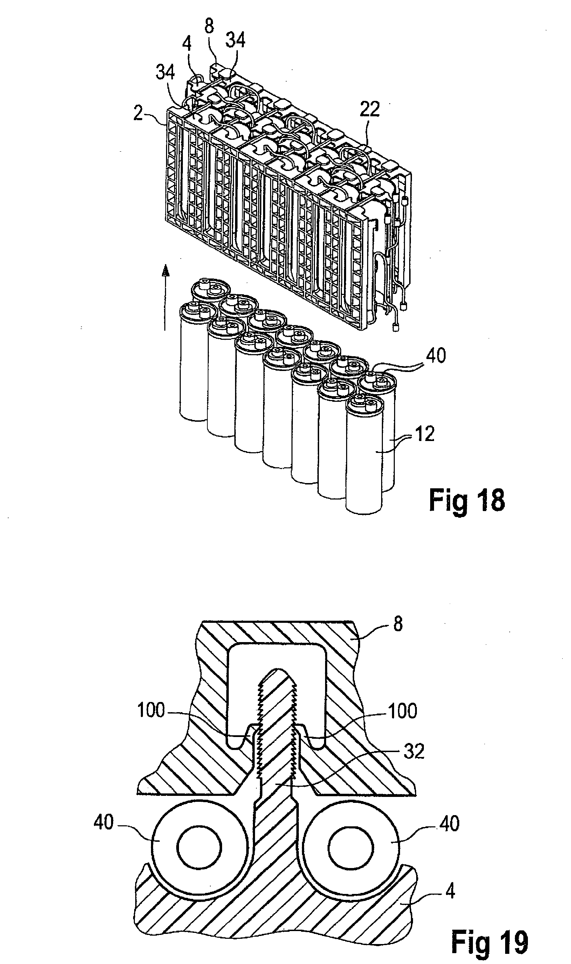

Afin de permettre une action de serrage suffisante sur chaque élément de batterie 12, au moins un moyen de retenue 12 devrait se situer en permanence entre des éléments de batterie voisins 12. Il s'agit en particulier bien sûr de deux moyens de retenue, à savoir d'un moyen de retenue 32 à hauteur axiale de chaque section de serrage 26. En disposant notamment les sections de socle 34 sur la face polaire (figures 15-18), les moyens de retenue 32, au lieu d'être aménagés entre les éléments (figure 12), peuvent également être aménagés au-dessus et au-dessous de l'extension des éléments dans l'axe longitudinal. Ceci est possible sur la face polaire, comme cela est illustré sur la figure 19, par exemple entre les pôles 40.

Contrairement à la figure 12, dans laquelle l'encliquetage s'effectue à travers une ouverture des deux flancs, sur lesquels la denture complémentaire 58 est disposée, la denture complémentaire, dans le cas de la figure 19, est disposée contre une attache élastique 100. Ceci présente l'avantage que la force de compression peut être réduite.

Le boîtier présente une structure modulaire, il n'est constitué que de parois latérales et de parois centrales de structure identique, de sorte qu'il peut être élargi de façon quelconque pour obtenir un plus grand nombre de rangées d'éléments de batterie.

Dans les modes de réalisation selon les figures 1 et 10, les sections de socle 34 reçoivent le fond des éléments dans la direction axiale (butée dans la direction axiale), tandis que le couvercle 10 est disposé sur la face des deux pôles 40. Mais il est tout aussi possible de fixer axialement les éléments 12 grâce à des sections de socle 34, qui sont aménagées sur les pièces en matière plastique 2, 4, 6, 8 sur la face des pôles 40, comme cela est illustré sur les figures 16, 17 et 18. Le couvercle 10 est vissé dans ce mode de réalisation sur la face opposée aux pôles 40 (ce qu'on appelle la face de fond d'éclatement) des éléments 12.

L'avantage de cette disposition est qu'en introduisant les éléments 12 à travers un évidement correspondant des pôles 40 disposés de manière asymétrique dans la section de socle 34, cela établit une sécurité anti-rotation qui empêche les pôles plus et moins de permuter.

Dans ce mode de réalisation également, les sections fléchies 22 des tubes 18 se situent au-dessus et au-dessus des éléments 12.

## Revendications

1. Bloc de batterie d'entraînement d'un véhicule électrique, à pile à combustible ou hybride destiné à transporter des personnes et/ou des marchandises, comprenant plusieurs éléments de batterie (12) préfabriqués, enfermés dans des boîtiers (14) respectifs fermés vis-à-vis de l'extérieur et un boîtier fixant les éléments de batterie (12) les uns aux autres, les éléments de batterie (12) étant disposés en rangée, le boîtier comprenant par rangée au moins deux parois (2 à 8) s'appliquant contre les zones extérieures opposées de la périphérie des éléments de batterie (12), **caractérisé en ce que** les parois sont étayées les unes contre les autres dans la direction radiale des éléments de batterie (12) par des moyens de retenue (32 ; 60 ; 62), afin de serrer radialement les éléments de batterie (12) entre eux, chaque paroi possédant, pour un élément de batterie (12), une section de serrage (26) correspondante, et **en ce que**, pour chaque rangée, une première paroi comporte des moyens de retenue (32 ; 50 ; 62) solidaires de lactite première paroi et en prise dans des évidements d'une seconde paroi, opposée à la première paroi, de manière à fixer les première et seconde parois l'une contre l'autre.

2. Bloc de batterie d'entraînement selon la revendication 1, **caractérisé en ce que** les parois (2 à 8) possèdent des sections de serrage (26) particulièrement en forme de demi-coque, adaptées à la périphérie extérieure des éléments de batterie (12).

3. Bloc de baLLerie d'entraînement selon l'une quelconque des revendications précédentes, **caractérisé en ce que** les sections de serrage (26) s'étendent au maximum jusqu'à la ligne médiane centrale (M) d'une rangée d'éléments de batterie (12), et de préférence terminent avant celle-ci.

4. Bloc de batterie d'entraînement selon l'une quelconque des revendications précédentes, **caractérisé en ce que** les sections de serrage (26) reposent contre les sections d'extrémité axiales des éléments de batterie (12).

5. Bloc de batterie d'entraînement selon l'une quelconque des revendications précédentes, **caractérisé en ce qu'**au moins un tube (18) acheminant le fluide de refroidissement, destiné à évacuer l'énergie calorifique des éléments de batterie (12), s'étend à travers le boîtier.

6. Bloc de batterie d'entraînement selon la revendication 5, **caractérisé en ce que** le tube (18) possède des zones (20, 22) rectilignes et fléchies eL n'est stabilisé qu'au niveau des zones rectilignes (22) de sections d'appui (42), les sections d'appui (42) étant éloignées de la paroi (2 à 8) intégrées sur celle-ci et éloignées des sections de serrage (26).

7. Bloc de batterie d'entraînement selon la revendication 5 ou 6, **caractérisé en ce que** le tube (18) est couplé à des lamelles de refroidissement (16), lesquelles reposent contre des éléments de batterie (12).

8. Bloc de batterie d'entraînement selon la revendication 7, **caractérisé en ce que** des sections de pression de lamelle (44), qui pressent les lamelles de refroidissement (16) contre la périphérie des batteries, sont éloignées de la paroi.

9. Bloc de batterie d'entraînement selon la revendication 8, **caractérisé en ce que** les sections de pression de lamelle (44) présentent une géométrie adaptée à la forme de la batterie.

10. Bloc de batterie d'entraînement selon la revendication 8 ou 9, **caractérisé en ce que** les sections de pression de lamelle (44) sont réalisées de manière élastique dans la direction radiale.

11. Bloc de batterie d'entraînement selon la revendication 6 et en plus selon l'une quelconque des revendications 8 à 10, **caractérisé en ce que** les sections de pression de lamelle (44) partent des sections d'appui (42) et s'étendent à distance de celles-ci.

12. Bloc de batterie d'entraînement selon l'une quelconque des revendications 8 à 11, **caractérisé en ce que** les sections de pression de lamelle (44) et les lamelles de refroidissement (16) elles-mêmes sont espacées des sections de serrage (26).

13. Bloc de batterie d'entraînement selon l'une quelconque des revendications 7 à 12, **caractérisé en ce que** le serrage radial des éléments de batterie (12), la mise en contact des éléments de batterie (12) avec les lamelles de batterie (16) et la mise en contact des lamelles de refroidissement (16) avec les tubes (18) s'effectuent respectivement en faisant appliquer une précontrainte par différentes sections de la paroi (2 à 8).

14. Bloc de batterie d'entraînement selon l'une quelconque des revendications précédentes, **caractérisé en ce que** les parois (2 à 8) sont en matière plastique.

15. Bloc de batterie d'entraînement selon l'une quelconque des revendications précédentes, **caractérisé en ce que** les parois (2 à 8) sont reliées les unes aux autres par au moins un couvercle (10).

16. Bloc de batterie d'entraînement selon la revendication 15, **caractérisé en ce que** le couvercle (10) étaye axialement et stabilise axialement sans jeu les éléments de batterie (12).

17. Bloc de batterie d'entraînement selon la revendication 15 ou 16, **caractérisé en ce que** le couvercle (10) est vissé aux parois (2 à 8).

18. Bloc de batterie d'entraînement selon l'une quelconque des revendications précédentes, **caractérisé en ce que** les moyens de retenue (32 ; 60 ; 62) sont des saillies prévues sur une paroi (2 à 8), lesquelles pénètrent dans des évidements correspondants (54) de la paroi opposée (2 à 8).

19. Bloc de batterie d'entraînement selon l'une quelconque des revendications précédentes, **caractérisé en ce que** les moyens de retenue (32 ; 60 ; 62) comprennent sur leur surface extérieure une denture (56), qui se met en prise par coopération de formes dans la surface de l'évidement (54) associé.

20. Bloc de batterie d'entraînement selon la revendication 19, **caractérisé en ce que** l'évidement possède une denture complémentaire (58) destinée à former une liaison par encliquetage.

21. Bloc de batterie d'entraînement selon la revendication 20, **caractérisé en ce que** la denture complémentaire (58) est une attache élastique.

22. Bloc de batterie d'entraînement selon l'une quelconque des revendications précédentes, **caractérisé en ce que** respectivement au moins un moyen de retenue (32 ; 60 ; 62) est prévu entre les éléments de batterie voisins (12).

23. Bloc de batterie d'entraînement selon l'une quelconque des revendications 1 à 21, **caractérisé en ce que** les moyens de retenue (32), par rapport à la direction longitudinale des éléments de batterie (12), sont disposés au-dessus et/ou au-dessous des éléments de batterie (12).

24. Bloc de batterie d'entraînement selon l'une quelconque des revendications précédentes, **caractérisé en ce que** les moyens de retenue (32 ; 60 ; 62) se situent axialement dans la zone des sections de serrage (26).

25. Bloc de batterie d'entraînement selon la revendication 24, **caractérisé en ce que** le moyen de retenue (32 ; 60 ; 62) possède une longueur axiale qui correspond à au moins 0,8 fois la longueur axiale de la section de serrage (26) associée.

## Patentansprüche

1. Batterieblock für den Antrieb eines Elektrofahrzeugs des Brennstoffzellen- oder Hybrid-Typs, das dazu bestimmt ist, Personen und/oder Waren zu transportieren, mit mehreren im Voraus gefertigten Batterieelementen (12), die in jeweilige Gehäuse (14) eingeschlossen sind, die gegenüber der äußeren Umgebung verschlossen sind, und mit einem Gehäuse, das die Batterieelemente (12) relativ zueinander fixiert, wobei die Batterieelemente (12) in Reihen angeordnet sind, wobei das Gehäuse pro Reihe wenigstens zwei Wände (2 bis 8) aufweist, die an den gegenüberliegenden äußeren Zonen des Umfangs der Batterieelemente (12) anliegen, **dadurch gekennzeichnet, dass** sich die Wände in der radialen Richtung der Batterieelemente (12) durch Haltemittel (32; 60; 62) aneinander abstützen, um die Batterieelemente (12) zwischen sich radial einzuklemmen, wobei jede Wand für ein Batterieelement (12) einen entsprechenden Klemmabschnitt (26) besitzt, und dass für jede Reihe eine erste Wand Haltemittel (32; 60; 62), die mit der ersten Wand fest verbunden sind und mit Aussparungen einer zweiten Wand gegenüber einer ersten Wand in Eingriff sind, umfasst, derart, dass die erste und die zweite Wand aneinander befestigt sind.

2. Antriebsbatterieblock nach Anspruch 1, **dadurch gekennzeichnet, dass** die Wände (2 bis 8) Klemmabschnitte (26) insbesondere in Form einer Halbschale besitzen, die an den äußeren Umfang der Batterieelemente (12) angepasst sind.

3. Antriebsbatterieblock nach einem der vorhergehenden Ansprüche, **dadurch gekennzeichnet, dass** sich die Klemmquerschnitte (26) höchstens bis zu der mittigen Medianlinie (M) einer Reihe von Batterieelementen (12) erstrecken und vorzugsweise vor dieser enden.

4. Antriebsbatterieblock nach einem der vorhergehenden Ansprüche, **dadurch gekennzeichnet, dass** die Klemmquerschnitte (26) an den axialen Endabschnitten der Batterieelemente (12) anliegen.

5. Antriebsbatterieblock nach einem der vorhergehenden Ansprüche, **dadurch gekennzeichnet, dass** sich wenigstens ein Rohr (18), das Kühlungsfluid führt, das dazu bestimmt ist, die Wärmeenergie der Batterieelemente (12) abzuführen, durch das Gehäuse erstreckt.

6. Antriebsbatterieblock nach Anspruch 5, **dadurch gekennzeichnet, dass** das Rohr (18) geradlinige und gebogene Zonen (20, 22) besitzt und nur auf Höhe der geradlinigen Zonen (22) von Abstützabschnitten (42) stabilisiert ist, wobei die Abstützabschnitte (42) von der Wand (2 bis 8) entfernt sind und in diese integriert sind und von den Klemmabschnitte (26) entfernt sind.

7. Antriebsbatterieblock nach Anspruch 5 oder 6, **dadurch gekennzeichnet, dass** das Rohr (18) mit Kühlungslamellen (16) gekoppelt ist, die an den Batterieelementen (12) anliegen.

8. Antriebsbatterieblock nach Anspruch 7, **dadurch gekennzeichnet, dass** Lamellenpressabschnitte (44), die die Kühlungslamellen (16) gegen den Umfang der Batterien pressen, von der Wand entfernt sind.

9. Antriebsbatterieblock nach Anspruch 8, **dadurch gekennzeichnet, dass** die Lamellenpressabschnitte (44) eine Geometrie aufweisen, die an die Form der Batterie angepasst ist.

10. Antriebsbatterieblock nach Anspruch 8 oder 9, **dadurch gekennzeichnet, dass** die Lamellenpressabschnitte (44) so verwirklicht sind, dass sie in radialer Richtung elastisch sind.

11. Antriebsbatterieblock nach Anspruch 6 und außerdem nach einem der Ansprüche 8 bis 10, **dadurch gekennzeichnet, dass** die Lamellenpressabschnitte (44) von Abstützabschnitten (42) ausgehen und sich bis zu einem Abstand von diesen erstrecken.

12. Antriebsbatterieblock nach einem der Ansprüche 8 bis 11, **dadurch gekennzeichnet, dass** die Lamellenpressabschnitte (44) und die Kühlungslamellen (16) selbst von den Klemmabschnitten (26) beabstandet sind.

13. Antriebsbatterieblock nach einem der Ansprüche 7 bis 12, **dadurch gekennzeichnet, dass** die radiale Klemmung der Batterieelemente (12), die Herstellung des Kontakts zwischen den Batterieelementen (12) mit den Batterielamellen (16) und die Herstellung des Kontakts zwischen den Kühlungslamellen (16) und den Rohren (18) jeweils durch Anwenden einer Vorbeanspruchung durch unterschiedliche Abschnitte der Wand (2 bis 8) erfolgen.

14. Antriebsbatterieblock nach einem der vorhergehenden Ansprüche, **dadurch gekennzeichnet, dass** die Wände (2 bis 8) aus Kunststoff hergestellt sind.

15. Antriebsbatterieblock nach einem der vorhergehenden Ansprüche, **dadurch gekennzeichnet, dass** die Wände (2 bis 8) durch wenigstens einen Deckel (10) miteinander verbunden sind.

16. Antriebsbatterieblock nach Anspruch 15, **dadurch gekennzeichnet, dass** der Deckel (10) die Batterieelemente (12) axial abstützt und axial spielfrei stabilisiert.

17. Antriebsbatterieblock nach Anspruch 15 oder 16, **dadurch gekennzeichnet, dass** der Deckel (10) mit den Wänden (2 bis 8) verschraubt ist.

18. Antriebsbatterieblock nach einem der vorhergehenden Ansprüche, **dadurch gekennzeichnet, dass** die Haltemittel (32; 60; 62) Vorsprünge sind, die an einer Wand (2 bis 8) vorgesehen sind, die in die entsprechenden Aussparungen (54) der gegenüberliegenden Wand (2 bis 8) eindringen.

19. Antriebsbatterieblock nach einem der vorhergehenden Ansprüche, **dadurch gekennzeichnet, dass** die Haltemittel (32; 60; 62) an ihrer äußeren Oberfläche eine Zahnung (56) aufweisen, die durch Formzusammenwirkung mit der Oberfläche der zugeordneten Aussparung (54) in Eingriff ist.

20. Antriebsbatterieblock nach Anspruch 19, **dadurch gekennzeichnet, dass** die Aussparung eine komplementäre Zahnung (58) besitzt, die dazu bestimmt ist, eine Verbindung durch Einrasten zu bilden.

21. Antriebsbatterieblock nach Anspruch 20, **dadurch gekennzeichnet, dass** die komplementäre Zahnung (58) eine elastische Befestigung ist.

22. Antriebsbatterieblock nach einem der vorhergehenden Ansprüche, **dadurch gekennzeichnet, dass** jeweils wenigstens ein Haltemittel (32; 60; 62) zwischen den benachbarten Batterieelementen (12) vorgesehen ist.

23. Antriebsbatterieblock nach einem der Ansprüche 1 bis 21, **dadurch gekennzeichnet, dass** die Haltemittel (32) in Bezug auf die Längsrichtung der Batterieelemente (12) über und/oder unter den Batterieelementen (12) angeordnet sind.

24. Antriebsbatterieblock nach einem der vorhergehenden Ansprüche, **dadurch gekennzeichnet, dass** sich die Haltemittel (32; 60; 62) axial in der Zone der Klemmabschnitte (26) befinden.

25. Antriebsbatterieblock nach Anspruch 24, **dadurch gekennzeichnet, dass** das Haltemittel (32; 60; 62) eine axiale Länge besitzt, die wenigstens gleich der 0,8-fachen axialen Länge des zugeordneten Klemmabschnitts (26) entspricht.

## Claims

1. Power train battery block for an electric, fuel cell or hybrid vehicle intended to transport people and/or merchandize, comprising a plurality of prefabricated battery cells (12), enclosed in outwardly sealed respective housings (14) and a housing securing the battery cells (12) to one another, the battery cells (12) being arranged in rows, the housing comprising, for each row, at least two walls (2 to 8) applied against the opposite outer areas of the periphery of the battery cells (12), **characterized in that** the walls are propped against one another in the radial direction of the battery cells (12) by retaining means (32; 60; 62), in order to radially grip the battery cells (12) between them, each wall having, for a battery cell (12), a corresponding gripping section (26) and **in that**, for each row, a first wall comprises retaining means (32; 60; 62) securely attached to said first wall and engaged in voids in a second wall, opposite the first wall, so as to secure the first and second walls against one another.

2. Power train battery block according to Claim 1, **characterized in that** the walls (2 to 8) have gripping sections (26) particularly in the form of a half-shell, matched to the outer periphery of the battery cells (12).

3. Power train battery block according to any one of the preceding claims, **characterized in that** the gripping sections (26) extend at most as far as the central median line (M) of a row of battery cells (12), and preferably terminate before the latter.

4. Power train battery block according to any one of the preceding claims, **characterized in that** the gripping sections (26) rest against the axial end sections of the battery cells (12).

5. Power train battery block according to any one of the preceding claims, **characterized in that** at least one tube (18) conveying the coolant, intended to evacuate the heat energy from the battery cells (12), extends through the housing.

6. Power train battery block according to Claim 5, **characterized in that** the tube (18) has rectilinear and bent areas (20, 22) and is stabilized only in the rectilinear areas (22) of bearing sections (42), the bearing sections (42) being apart from the wall (2 to 8) and incorporated thereon and apart from the gripping sections (26).

7. Power train battery block according to Claim 5 or 6, **characterized in that** the tube (18) is coupled to cooling plates (16), which rest against battery cells (12).

8. Power train battery block according to Claim 7, **characterized in that** plate pressure sections (44), which press the cooling plates (16) against the periphery of the batteries, are apart from the wall.

9. Power train battery block according to Claim 8, **characterized in that** the plate pressure sections (44) have a geometry matched to the form of the battery.

10. Power train battery block according to Claim 8 or 9, **characterized in that** the plate pressure sections (44) are produced to be elastic in the radial direction.

11. Power train battery block according to Claim 6 and also according to any one of Claims 8 to 10, **characterized in that** the plate pressure sections (44) start from the bearing sections (42) and extend at a distance therefrom.

12. Power train battery block according to Claims 8 to 11, **characterized in that** the plate pressure sections (44) and the cooling plates (16) themselves are spaced apart from the gripping sections (26).

13. Power train battery block according to any one of Claims 7 to 12, **characterized in that** the radial gripping of the battery cells (12), the contacting of the battery cells (12) with the battery plates (16) and the contacting of the cooling plates (16) with the tubes (18) are performed respectively by having a prestress applied by different sections of the wall (2 to 8).

14. Power train battery block according to any one of the preceding claims, **characterized in that** the walls (2 to 8) are of plastic material.

15. Power train battery block according to any one of the preceding claims, **characterized in that** the walls (2 to 8) are linked to one another by at least one cover (10).

16. Power train battery block according to Claim 15, **characterized in that** the cover (10) axially props and axially stabilizes, without play, the battery cells (12).

17. Power train battery block according to Claim 15 or 16, **characterized in that** the cover (10) is screwed to the walls (2 to 8).

18. Power train battery block according to any one of the preceding claims, **characterized in that** the retaining means (32; 60; 62) are protuberances provided on a wall (2 to 8), which penetrate into corresponding voids (54) in the opposite wall (2 to 8).

19. Power train battery block according to any one of the preceding claims, **characterized in that** the retaining means (32; 60; 62) comprise, on their outer surface, teeth (56), which engage, by cooperation of forms, in the surface of the associated void (54).

20. Power train battery block according to Claim 19, **characterized in that** the void has complementary teeth (58) intended to form a snap-fitting link.

21. Power train battery block according to Claim 20, **characterized in that** the complementary teeth (58) are an elastic fastening.

22. Power train battery block according to any one of the preceding claims, **characterized in that**, respectively at least one retaining means (32; 60; 62) is provided between the adjacent battery cells (12).

23. Power train battery block according to any one of Claims 1 to 21, **characterized in that** the retaining means (32), relative to the longitudinal direction of the battery cells (12), are arranged above and/or below the battery cells (12).

24. Power train battery block according to any one of the preceding claims, **characterized in that** the retaining means (32; 60; 62) are situated axially in the area of the gripping sections (26).

25. Power train battery block according to Claim 24, **characterized in that** the retaining means (32; 60; 62) has an axial length which corresponds to at least 0.8 times the axial length of the associated gripping section (26).
